# EUROPEAN PATENT APPLICATION

(11) **EP 1 939 781 A1**
(43) Date of publication of application: **02.07.2008**
(21) Application number: 07024604.6
(22) Date of filing: 19.12.2007
(51) Int. Cl.: G06F 21/00

(54) **Sharing usage rights**

(30) Priority: 22.12.2006 US 615754
(71) Applicant: Nortel Networks Limited, St Laurent, Québec H4S 2A9 (CA)
(72) Inventor: Soukup, Martin Jan, Ottawa Ontario K1V 1Y3 (CA); Nannra, Anoop, Orleans Ontario K4A 4M1 (CA); Meier, Martin, Ottawa Ontario K1Z 8M6 (CA)
(74) Representative: Boyce, Conor

(57) **Abstract**

A rights management technique allows user terminals to share usage rights that are necessary for accessing associated media content, while ensuring that the media content is not accessed in violation of the usage rights. A content provider may deliver the media content and the associated usage rights to a first user terminal. The usage rights may be sharable as well as divisible. The first user terminal will account for all or that portion of the usage rights that are subsequently transferred, and may retain any remaining usage rights. The first user terminal may transfer all or a portion of any usage rights at the first user terminal to a second user terminal, wherein the transferred usage rights allow the second user terminal to access the media content. The second user terminal may also transfer the usage rights, and perhaps the media content, to other user terminals.

## Description

### Field of the Invention

The present invention relates to digital rights management, and in particular to sharing usage rights among user terminals of a given user or different users in a controlled manner.

### Background of the Invention

Digital rights management (DRM) is a term used to identify various technologies that allow copyright owners and publishers to control the distribution and access of any type of digital media content, such as documents and music or video content. Current DRM techniques are quite restrictive as a result of the copyright owners and publishers trying to control unauthorized copying and sharing of digital media content. Consumers and the copyright owners and publishers are generally at odds, since the consumers want the freedom to use media content that was legally obtained on different user terminals. The copyright owners and publishers are less concerned about media content being shared among a given user's user terminals as they are about the media content being shared with other users who have no right to access the media content.

Further, copyright owners and publishers are becoming more creative in distributing their media content. For instance, limited usage rights are now being provided in association with certain media content, wherein the media content can only be accessed a certain number of times or for a given period of time. For example, a user may purchase usage rights to listen to a song ten times. Unfortunately, the usage rights for the song are often limited to the user terminal to which the song and the usage rights were downloaded. The user does not have the right to listen to the song on other ones of their user terminals or transfer the song to a user terminal of another user, even if the user has remaining usage rights. Such limitations are unduly restrictive in an age where technology is evolving to provide greater flexibility and convenience in sharing and using media content. Accordingly, there is a need for a DRM technique that allows users to share usage rights for media content among their user terminals as well as share usage rights with user terminals of other users in a manner ensuring that the interests of the copyright owners and publishers are protected.

### Summary of the Invention

The present invention is a rights management technique that allows user terminals to share usage rights that are necessary for accessing associated media content, while ensuring that the media content is not accessed in violation of the usage rights. A content provider may deliver the media content and the associated usage rights to a first user terminal. The usage rights may be sharable as well as divisible. Sharable usage rights are usage rights that may be directly or indirectly transferred in whole or part from one user terminal to another. The usage rights may be shared among the user terminals of a given user or different users. Divisible usage rights are those that may be divided, such that a portion of the usage rights may be transferred from one user terminal to another. The first user terminal will account for all or that portion of the usage rights that were transferred and may retain any remaining usage rights. As such, the first user terminal may transfer all or a portion of any usage rights at a first user terminal to a second user terminal, where the transferred usage rights allow the second user terminal to access the media content. The second user terminal may retrieve the media content from the first user terminal or from another source. The second user terminal may also transfer the usage rights, and perhaps the media content, to other user terminals. Therefore, the usage rights may be transferred in whole or in part among user terminals, such that the usage rights at any given user terminal may be equitably shared with other terminals.

The usage rights may restrict the number of times that the media content may be accessed for playback or copying. Alternatively, the usage rights may define a period of time in which the media content may be accessed or an amount of time during which the media content may be accessed. For example, the media content may be accessed for a certain period from the time the media content or usage rights were issued, or the media content may be accessed for a total amount of time over any period of time. As noted, the usage rights may be sharable or divisible, and such status may change for subsequent transfers. For example, sharable usage rights may be divisible by the first user terminal to receive them. Subsequent user terminals may be able to transfer the usage rights, but not divide them. Further, the usage rights may not be transferable after a certain number of transfers.

The usage rights may be passed from the content provider to a user terminal and between user terminals in a rights object. In addition to the usage rights, the rights object may provide additional use restrictions and access criteria associated with the media content. For example, the rights restrictions may define authorized user terminals, types of user terminals, authorized users, or any combination thereof to which the usage rights apply. The rights restrictions may also provide limitations on the resolutions, compression rates, output formats, aspect ratios, output signal types (analog or digital), and the like. The access criteria may include passwords, access codes, or one or more encryption keys that are required to access or decrypt the associated media content when accessed.

### Brief Description of the Drawing Figures

The accompanying drawing figures incorporated in and forming a part of this specification illustrate several aspects of the invention, and together with the description serve to explain the principles of the invention.
FIGURE 1 is a block representation of a communication environment according to one embodiment of the present invention.
FIGURES 2A-2C are a communication flow illustrating a first embodiment of the present invention.
FIGURE 3 is a communication flow illustrating a second embodiment of the present invention.
FIGURE 4 is a communication flow illustrating a third embodiment of the present invention.
FIGURE 5 is a block representation of a content provider according to one embodiment of the present invention.
FIGURE 6 is a block representation of a user terminal according to one embodiment of the present invention.

### Detailed Description of the Preferred Embodiments

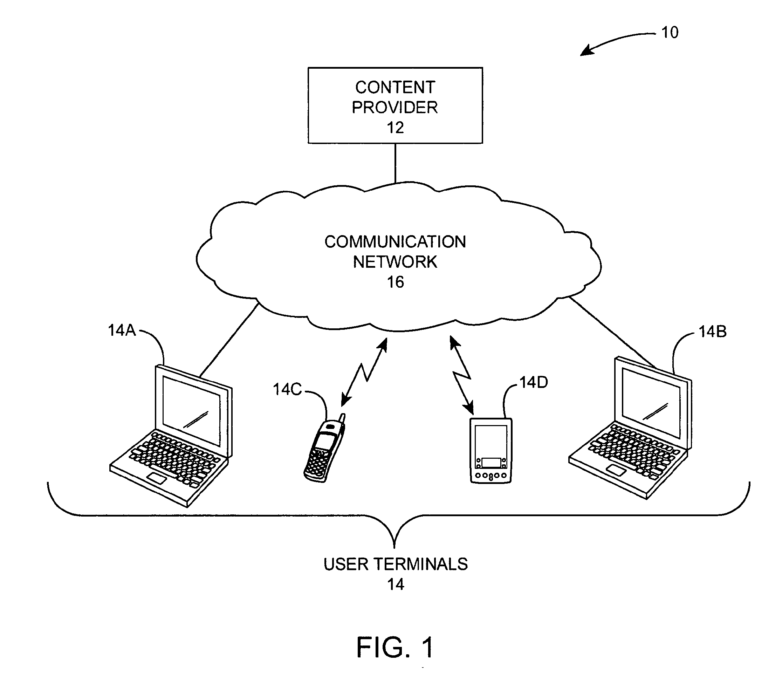

With reference to Figure 1, an overview of a communication environment 10 in which the present invention is employed is provided. As illustrated, a content provider 12 is configured to provide media content and associated usage rights to any number of user terminals 14 over an appropriate communication network 16. The content provider 12 represents any one or more service nodes that operate cooperatively to provide media content and provide rights management, such as digital rights management for digital media content, which controls how media content is distributed and accessed. The depicted user terminals 14 include personal computers 14A and 14B, a cellular telephone 14C, and a personal digital assistant 14D; however, user terminals 14 are not limited thereto. For clarity and readability, the respective user terminals 14 are referenced as user terminal 14A, user terminal 14B, user terminal 14C, and user terminal 14D, when reference to a particular user terminal 14 is made. Further, although certain user terminals 14 are depicted as supporting wired or wireless communications, those skilled in the art will recognize that any type of user terminal 14 may use any type of communications.

The present invention allows user terminals 14 to share usage rights that are necessary for accessing associated media content while ensuring that the media content is not accessed in violation of the usage rights. Generally, both media content and usage rights are transferred securely. In addition, the rights consumption on the user terminal 14 is secured through a trusted application, usually using a secure loading mechanism. Such mechanisms are well understood in the art. The content provider 12 may deliver the media content and the associated usage rights to a first user terminal 14A. The usage rights may be sharable as well as divisible. The usage rights may be shared among the user terminals 14 of a given user or different users. Sharable usage rights are usage rights that may be directly or indirectly transferred in whole or part from one user terminal 14 to another. Divisible usage rights are those that may be divided, such that a portion of the usage rights may be transferred from one user terminal 14A to another. The first user terminal 14A will account for all or that portion of the usage rights that were transferred and may retain any remaining usage rights. As such, the first user terminal 14A may transfer all or a portion of any usage rights at a first user terminal 14A to a second user terminal 14B, wherein the transferred usage rights allow the second user terminal 14B to access the media content while the usage rights are removed from the first user terminal 14A. The second user terminal 14B may retrieve the media content from the first user terminal 14A or another source, including the content provider 12. The second user terminal 14B may also transfer the usage rights, and perhaps the media content, to other user terminals 14. Therefore, the usage rights may be transferred in whole or in part among user terminals 14, such that the usage rights at any given user terminal 14 may be equitably shared with other user terminals 14.

In one embodiment, the first user terminal 14A may access the media content based on the usage rights, wherein the usage rights are modified accordingly to account for accessing the media content. The second user terminal 14B may request the media content from the first user terminal 14A, which will provide the media content and all or a portion of the remaining usage rights of the first user terminal 14A to the second user terminal 14B. The first user terminal 14A will account for the transfer of usage rights to the second user terminal 14B, and the second user terminal 14B is able to access the media content according to the transferred usage rights. The usage rights may be transferred directly to the second user terminal 14B from the first user terminal 14A, or indirectly via the content provider 12. In the latter case, the first user terminal 14A will instruct the content provider 12 to deliver all or a portion the usage rights to the second user terminal 14B and then account for the transferred usage rights. With the present invention, defined usage rights that are issued by a content provider 12 may be shared from one user terminal 14 to another while accounting for accesses of the media content associated with the usage rights.

The usage rights may restrict the number of times that the media content may be accessed for playback or copying. Alternatively, the usage rights may define a period of time during which the media content may be accessed or a total amount of time for which the media content may be accessed. For example, the media content may be accessed during a 24 hour period from the time the media content or usage rights were issued, or the media content may be accessed for a total of 10 hours over any period of time. As noted, the usage rights may be sharable or divisible, and such status may change for subsequent transfers. For example, sharable usage rights may be divisible by the first user terminal 14A. User terminals 14 that receive usage rights from the first user terminal 14A may be able to transfer the usage rights, but not divide them. Further, the usage rights may not be transferable after a certain number of transfers from one user terminal 14 to another. Those skilled in the art will recognize limitless ways to define how usage rights may be shared and divided among user terminals 14 to accomplish various objectives.

If the first user terminal 14A is provided usage rights allowing the user to access the media content N times, the first user terminal 14A may be able to transfer usage rights to the second user terminal 14B to allow the second user terminal 14B to access the media content *M* times, where *N* > *M.* The first user terminal 14A will reduce the residual user rights by *M,* such that the first user terminal 14A is only able to access the media content *N - M* times, and the second user terminal 14B is able to access the media content *M* times. If the usage rights define a period of time in which to access the media content or a certain amount of time for access, the period of time or the amount of time may be divided and shared among the user terminals 14 in a similar fashion.

The usage rights may be passed from the content provider 12 to a user terminal 14 and between user terminals 14 in a rights object. In addition to the usage rights, the rights object may provide additional rights restrictions and access criteria associated with the media content. For example, the rights restrictions may define authorized user terminals 14, types of user terminals 14, authorized users, or any combination thereof to which the usage rights apply. The rights restrictions may also provide limitations on the resolutions, compression rates, output formats, aspect ratios, output signal types (analog or digital), and the like. The access criteria may include passwords, access codes, or one or more encryptions keys that are required to access or decrypt the associated media content when accessed.

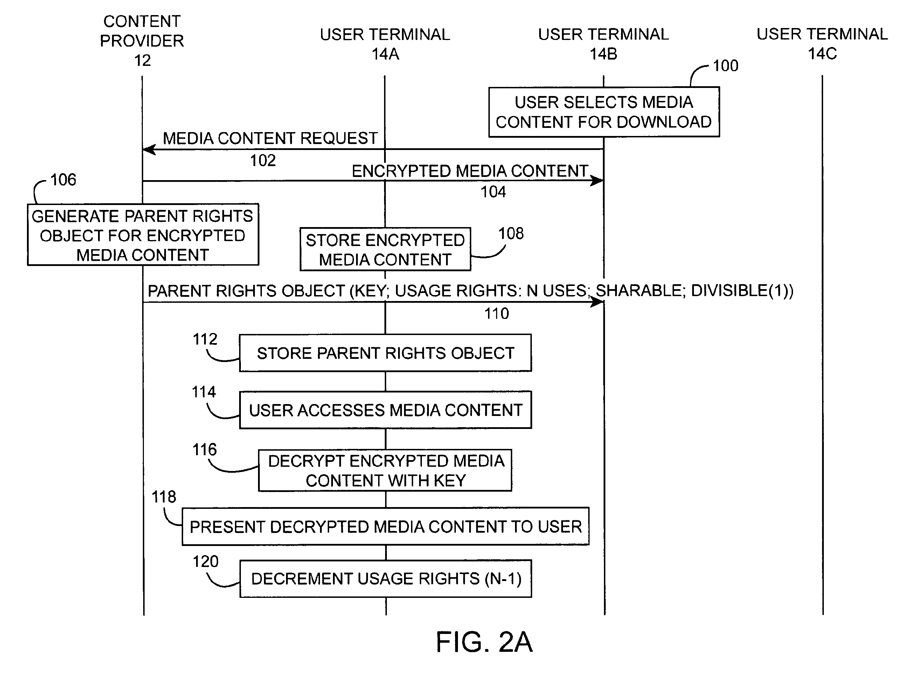

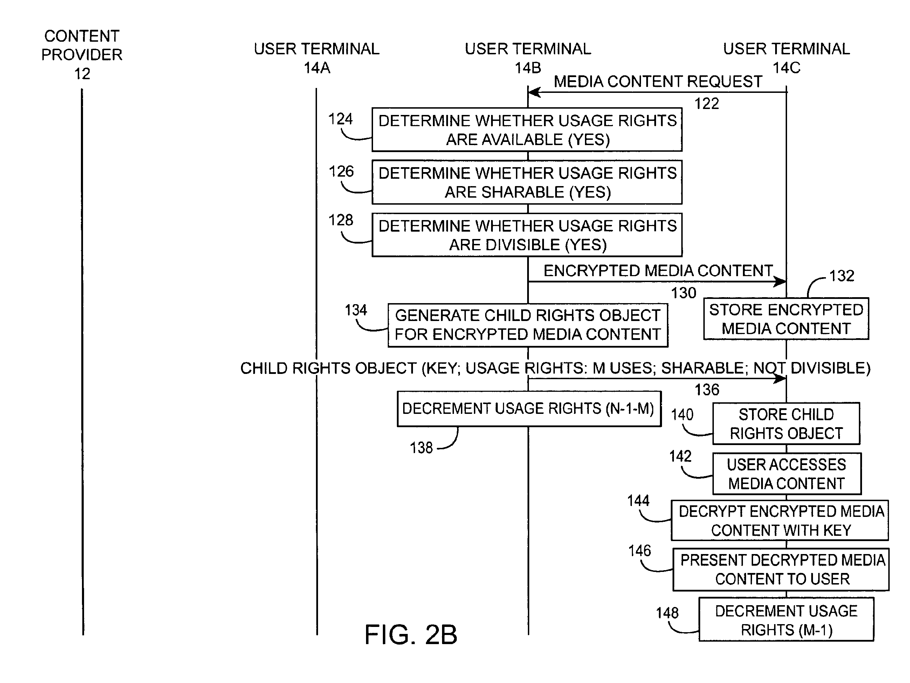

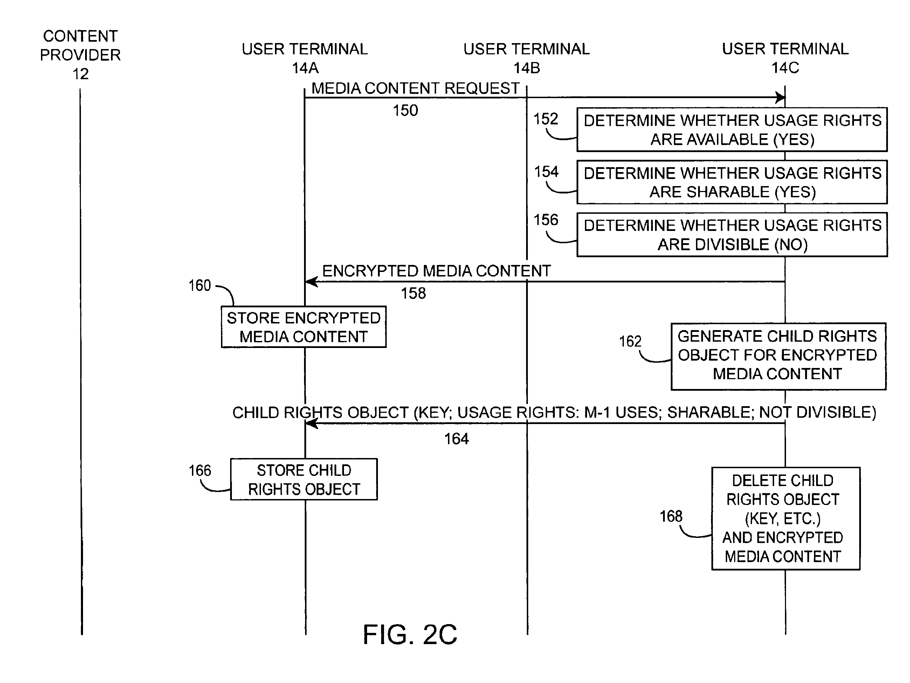

A series of communication flows are provided in Figures 2A-2C, 3, and 4 to illustrate operation of the present invention according to several embodiments. The communication flows are merely exemplary and provided to facilitate an understanding of the present invention and the scope thereof. Those skilled in the art will recognize that the present invention is not limited to the disclosed communication flows or embodiments.

With particular reference to the communication flow provided in Figures 2A-2C, a first embodiment of the present invention is illustrated. In this embodiment, user terminal 14B requests and receives media content from the content provider 12. Along with the content, the content provider 12 provides a rights object to the user terminal 14B. The rights object will include a key and usage rights. Subsequently, user terminal 14C will request and receive user content from user terminal 14B, wherein user terminal 14B will divide its usage rights and transfer certain of the usage rights to user terminal 14C. Subsequently, user terminal 14A will request and receive the media content from user terminal 14C, which will provide the media content and certain usage rights to user terminal 14A. In this example, user terminal 14B has usage rights that are defined as being sharable and divisible. Once the usage rights are transferred to another user terminal 14, the usage rights are only transferable and not divisible. As such, user terminal 14B may retain some usage rights after transferring other usage rights, wherein user terminal 14C is not able to retain any usage rights after transferring usage rights to user terminal 14A.

Initially, assume the user associated with user terminal 14B selects certain media content for downloading from the content provider 12 (step 100). User terminal 14B will send a Media Content Request for the selected media content to the content provider 12 (step 102). In response, the content provider 12 will download encrypted media content to the user terminal 14B (step 104) and generate a parent rights object for the encrypted media content (step 106). User terminal 14B will store the encrypted media content (step 108) and the content provider 12 will deliver the rights object associated with the encrypted media content to user terminal 14B (step 110).

The rights object may be delivered along with or separate from the encrypted media content.

In this example, the rights object includes access criteria and usage rights. The access criteria is a key required to decrypt the encrypted media content, and the usage rights define a number of N uses, or accesses, allowed for the encrypted media content. The rights object also includes information indicating that the usage rights are sharable and divisible. In particular, the usage rights may be divided once, and after the usage rights are divided for sharing among two or more user terminals 14, any subsequent usage rights may be sharable but are not further divisible. Upon receipt, user terminal 14B will store the parent rights object in association with the encrypted media content (step 112). The term "parent" is used to identify rights objects that are transferred initially from a content provider 12 to a user terminal 14. The term "child" is used to identify rights objects that are directly or indirectly shared among user terminals 14.

Once user terminal 14B has the encrypted media content and the associated parent rights object, the user associated with user terminal 14B may access the media content (step 114), wherein user terminal 14B will decrypt the encrypted media content with the key (step 116) and present the decrypted media content to the user (step 118). Steps 116 and 118 may be reversed. Every time the media content is accessed, the user terminal 14 will decrement the usage rights (step 120). After the encrypted media content is accessed once, the usage rights are decremented by one (*N* - 1 uses).

At this point, user terminal 14C may send a Media Content Request for the encrypted media content to user terminal 14B, instead of having to go through the content provider 12 (step 122) or user terminal 14B may push the encrypted media content to user terminal 14C. User terminal 14B will receive the media content request, and determine whether usage rights are available (step 124) where availability may depend on user defined policy, authentication, user confirmation, and rights issuer policy. Assuming that user rights are available, user terminal 14B will then determine whether the usage rights are sharable (step 126). Assuming the usage rights are available and sharable, user terminal 14B may determine whether the usage rights are divisible (step 128). Assuming that the usage rights are available, sharable, and divisible, user terminal 14B may then deliver a copy of the encrypted media content to user terminal 14C (step 130), which will store the encrypted media content (step 132). User terminal 14B will also generate a child rights object for the encrypted media content (step 134). The child rights object is based on information provided in the parent rights object, and is sent to user terminal 14C (step 136), which will store the child rights object (step 140). The child rights object will include the key, usage rights, and perhaps restrictions for the usage rights.

In this example, user terminal 14B granted user terminal 14C *M* of the available N - 1 uses remaining at user terminal 14B. Notably, the content provider 12 provided N uses to user terminal 14B, which used one of the N uses when the encrypted media content was accessed. The number of usage rights shared with user terminal 14C may be automatically determined by user terminal 14B, may be controlled by the user of user terminal 14B, or may be based on the number of uses requested in the media content request by user terminal 14C. Further, various restrictions provided in the parent rights object may also dictate how usage rights are divisible.

The usage rights in this example that are transferred from user terminal 14B to user terminal 14C are indicated as being sharable, but not divisible, since the initial usage rights granted by the content provider 12 to user terminal 14B were only divisible once. Since the usage rights were divided by user terminal 14B, the divided usage rights provided by user terminal 14B are not divisible by user terminals 14 that derive their usage rights from those originally provided to user terminal 14B. After transferring certain usage rights to user terminal 14C, user terminal 14B will decrement the remaining usage rights at user terminal 14B accordingly to account for the transfer of the usage rights (step 138). Steps 136 and 138 may be reversed. In this example, the usage rights remaining at user terminal 14B will be *N* - 1 - *M* uses.

A user of user terminal 14C may access the media content (step 142), wherein user terminal 14C will decrypt the encrypted media content with the key provided in the child rights object (step 144) and present the decrypted media content to the user (step 146). To account for a user accessing the media content, user terminal 14C will decrement its usage rights (step 148). Again, steps 146 and 148 may be reversed. The usage rights remaining at user terminal 14C at this point is now represented by *M -* 1 uses.

Next, assume that user terminal 14A sends a Media Content Request for the encrypted media content to user terminal 14C (step 150). User terminal 14C may determine whether the usage rights are available (step 152), sharable (step 154), and divisible (step 156). In this example, the usage rights are available and sharable, but not divisible. As such, all of the remaining usage rights at user terminal 14C must be transferred if the user of user terminal 14C desires to share the usage rights with user terminal 14A. Assuming the user of user terminal 14C is willing to share the usage rights with user terminal 14A, user terminal 14C will provide the encrypted media content to user terminal 14A (step 158), which will store the encrypted media content (step 160). User terminal 14C will also generate a child rights object for the encrypted media content (step 162) and send the child rights object to user terminal 14A in association with the encrypted media content (step 164).

Since the usage rights are no longer divisible in this example, the child rights object includes a key for decrypting the encrypted media content, and all of the usage rights (*M* - 1 uses) from user terminal 14C. The child rights object may also indicate that the usage rights are sharable but not divisible. The user terminal 14A will store the child rights object (step 166) and proceed to allow the user of user terminal 14A to access the encrypted media content based on the usage rights and using the key provide in the child rights object. Further, user terminal 14C will delete the child rights object, or at least all of the usage rights and perhaps the encrypted media content (step 168), since no usage rights remain for the encrypted media content at user terminal 14C. Each of the user terminals 14 may delete certain rights or restrictions in the rights objects, and may delete the encrypted media content when no usage rights remain due to the passage of time, a number of accesses, or a transfer of all remaining usage rights.

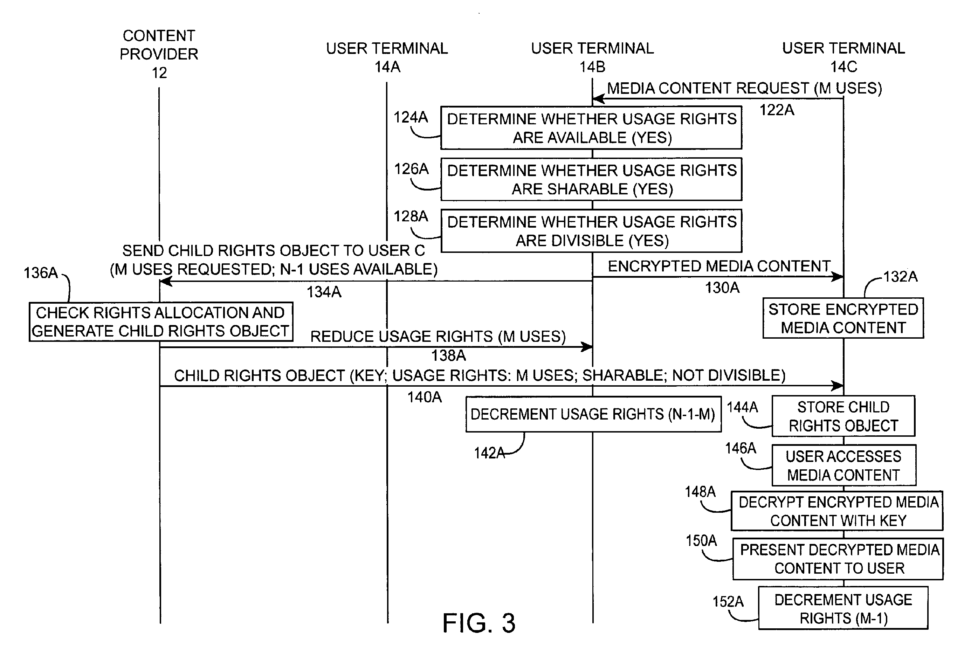

In the above communication flow, the child rights object was transferred directly from one user terminal 14 to another. In the communication flow of Figure 3, the child rights object is passed through the content provider 12 when user terminal 14B shares usage rights. Assume that the communication flow of Figure 3 begins after step 120 of the communication flow of Figures 2A-2C. As such, the encrypted media content and the corresponding parent rights object have been delivered to user terminal 14B, and the encrypted media content has been accessed once by user terminal 14B.

When user terminal 14C sends a Media Content Request, which includes a request for *M* uses of the encrypted media content (step 122A), user terminal 14B will determine whether the usage rights are available (step 124A), sharable (step 126A), and divisible (step 128A). Assume that the usage rights are available, sharable, and divisible in this example. As such, user terminal 14B may send the encrypted media content directly to user terminal 14C (step 130A) as well as send an instruction to the content provider 12 to provide a child rights object to the user at user terminal 14C to the content provider 12 (step 134A). The content provider 12 may check any rights allocation to authenticate the request, and then generate an appropriate child rights object for user terminal 14C to effectively share the rights residing at user terminal 14B (step 136A). Assume the instructions provided by user terminal 14B to the content provider 12 may identify the number of uses requested by user terminal 14C, as well as the number of available uses remaining at user terminal 14B.

The child rights object generated by the content provider 12 may include a key for decrypting the encrypted media content, usage rights (M uses), and an indication as to whether the usage rights are sharable and divisible. In this case, the usage rights are sharable but not divisible after being divided by user terminal 14B. The content provider 12 will send to user terminal 14B a message to reduce the usage rights remaining at user terminal 14B by *M* uses (step 138A) and may send the child rights object to user terminal 14C (step 140A). User terminal 14B may decrement its usage rights accordingly, such that the remaining usage rights are *N*-1-*M* uses (step 142A). Steps 134A and 142A may be reversed.

User terminal 14C may store the child rights object (step 144A), such that the user may access the media content (step 146A) to trigger user terminal 14C to decrypt the encrypted media content with the key (step 148A) and present the decrypted media content to the user (step 150A). After each access, the usage rights are decremented (step 152A), such that after one access, the usage rights remaining at user terminal 14C are *M* - 1 uses. Again, steps 150A and 152A may be reversed. Although the current example uses a number of uses to represent the usage rights, time periods or a total amount of time allocated to accessing particular media content may be divided and shared among the user terminals 14 in a similar fashion.

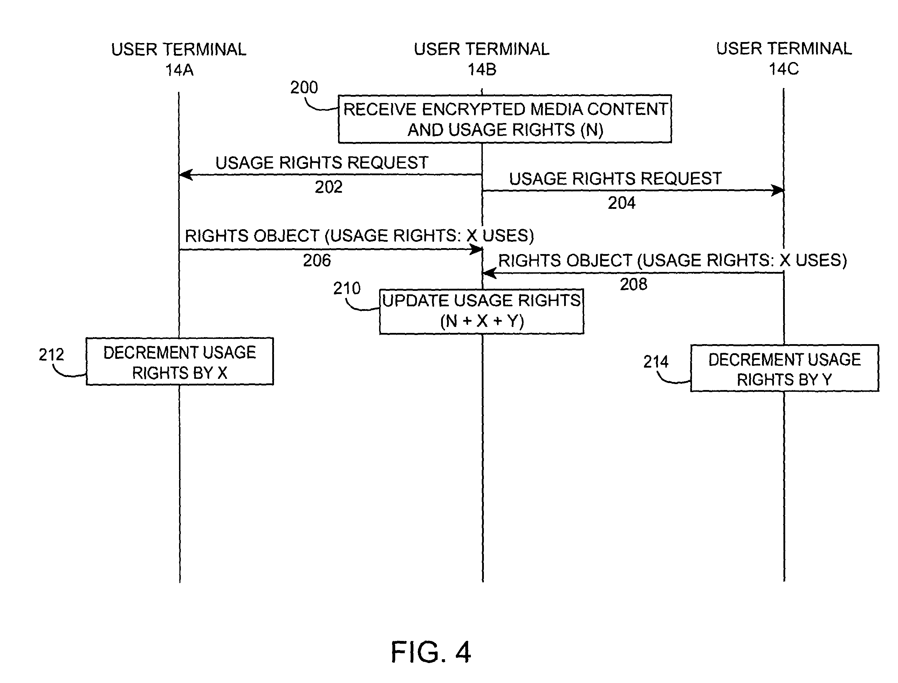

In another embodiment, one user terminal 14 may collect usage rights from multiple user terminals 14. With reference to Figure 4, a communication flow is illustrated wherein user terminal 14B requests and receives usage rights associated with particular media content from user terminal 14A and user terminal 14C. Initially, assume that the encrypted media content and certain usage rights (*N* uses) have been received by user terminal 14B, either from the content provider 12 or from another user terminal 14 (step 200). If the user wants to make more than N copies, access the media content more than N times, or share the media content in a manner requiring more than N uses, user terminal 14B may send usage rights requests to user terminals 14A and 14C (steps 202 and 204), which may provide rights objects back to user terminal 14B (steps 206 and 208). The rights objects may provide all or a portion of the usage rights residing at user terminals 14A and 14C, respectively. As illustrated, assume that user terminal 14A provides usage rights correlating to X uses, and user terminal 14C provides usage rights correlating to Y uses. User terminal 14B may update its usage rights accordingly, such that the total usage rights at user terminal 14B can be represented by *N* + *X* + Y uses (step 210).

User terminals 14A and 14C may decrement their usage rights by X and Y uses, respectively (steps 212 and 214) to account for the transfer of usage rights to user terminal 14B. At this point, user terminals 14A, 14B, and 14C may access the encrypted media content, based on any remaining usage rights.

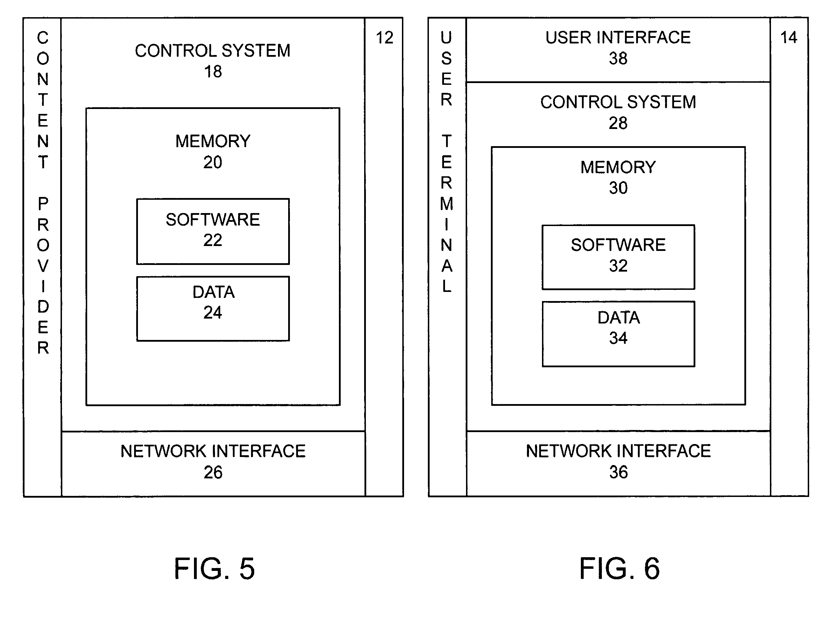

With reference to Figure 5, a block representation of a content provider 12 is illustrated. The content provider 12 will include a control system 18 having sufficient memory 20 for the requisite software 22 and data 24 to operate as described above. The control system 18 will also be associated with a network interface 26 to facilitate communications over the communication network 16 and with any number of user terminals 14 in a direct or indirect fashion.

With reference to Figure 6, a block representation of a user terminal 14 is provided. The user terminal 14 will include a control system 28 having sufficient memory 30 for the requisite software 32 and data 34 to operate as described above. The control system 28 is also associated with a network interface 36 to facilitate communications over the communication network 16, with other user terminals 14, and with the content provider 12 in a direct or indirect fashion. The control system 28 is also associated with a user interface 38 to facilitate interactions with a user. These interactions may include providing audible or visual output to a user through an appropriate speaker or display, as well as receiving input from the user. The user interface 38 and the control system 28 may also cooperate to provide bidirectional voice communications for telephony applications.

## Claims

1. A method for operating a first user terminal comprising:
• receiving media content and usage rights that control access to the media content;
• storing the media content and the usage rights at the first user terminal;
• receiving a first request from a second user terminal; and
• in response to the first request, sending from the first user terminal at least a first portion of the usage rights to the second user terminal, wherein the second user terminal is able to use the at least a first portion of the usage rights to access the media content.

2. The method of claim 1 further comprising reducing the usage rights by the at least a first portion of the usage rights in association with sending the at least a first portion of the usage rights to the second user terminal.

3. The method of claim 1 wherein a remainder of the usage rights remains at the first user terminal to control access to the media content after the at least a first portion of the usage rights are sent to the second user terminal.

4. The method of claim 1 wherein no usage rights remain at the first user terminal to control access to the media content after the at least a first portion of the usage rights are sent to the second user terminal.

5. The method of claim 1 wherein the media content and the usage rights are received from a content provider.

6. The method of claim 1 wherein the usage rights are received from a third user terminal.

7. The method of claim 6 wherein the media content is received from a third user terminal.

8. The method of claim 1 wherein the usage rights are received by the first user terminal from a plurality of user terminals.

9. The method of claim 1 wherein the media content is encrypted and the usage rights are received in association with a key required for decrypting the media content, and the at least a first portion of the usage rights is sent to the second user terminal in association with the key.

10. The method of claim 1 wherein the usage rights are received in association with first transfer information identifying whether the usage rights are divisible at the first user terminal, such that when the usage rights are divisible the at least a first portion of the usage rights may be less than all of the usage rights, and when the usage rights are not divisible the at least a first portion of the usage rights is all of the usage rights.

11. The method of claim 10 wherein when the first transfer information identifies the usage rights as being divisible, further comprising sending second transfer information to the second user terminal identifying the at least a first portion of the usage rights indivisible by the second user terminal.

12. The method of claim 1 wherein subsequent usage rights are received in association with second media content and first transfer information identifying whether the subsequent usage rights are transferable after being received by the first user terminal, such that when the subsequent usage rights are transferable, at least a portion of the subsequent usage rights may be transferred to the second user terminal, and when the subsequent usage rights are not transferable, the at least a portion of the subsequent usage rights are not transferred to the second user terminal.

13. The method of claim 1 wherein the usage rights define one of:
a number of authorized accesses of the media content;
a period of time during which the media content may be accessed; or
an amount of time that the media content may be accessed.

14. A user terminal comprising:
• a user interface;
• a network interface; and
• a control system associated with the user interface and the network interface and adapted to:
• receive media content and usage rights that control access to the media content;
• storing the media content and the usage rights;
• receive a first request from a second user terminal; and
• in response to the first request, send at least a first portion of the usage rights to the second user terminal, wherein the second user terminal is able to use the at least a first portion of the usage rights to access the media content.

15. A method for operating a first user terminal comprising:
• receiving media content and usage rights that control access to the media content from a content provider;
• storing the media content and the usage rights at the first user terminal;
• receiving a first request from a second user terminal; and
• in response to the first request, sending to the content provider instructions to send at least a first portion of the usage rights to the second user terminal, wherein the second user terminal is able to use the at least a first portion of the usage rights to access the media content.
